# EUROPÄISCHE PATENTANMELDUNG

(11) **EP 4 589 265 A1**
(43) Veröffentlichungstag der Anmeldung: **23.07.2025**
(21) Anmeldenummer: 24216183.4
(22) Anmeldetag: 28.11.2024
(51) Int. Cl.: G01D 21/00

(54) **MESSWERKZEUGFERNAUSLÖSER, MESSWERKZEUGSTEUERUNGSVERFAHREN, MESSDATENBEREITSTELLUNGSVERFAHREN UND MESSWERKZEUGSYSTEM**

(30) Priorität: 22.01.2024 DE 102024101717
(71) Anmelder: Hoffmann Engineering Services GmbH, 81241 München (DE)
(72) Erfinder: BARTH, Wolfram, 80337 München (DE); KÜNSTLER, Marko, 80634 München (DE); LIPPACH, Freddy, 81475 München (DE)
(74) Vertreter: Seemann & Partner Patentanwälte mbB

(57) **Zusammenfassung**

Die Erfindung betrifft unter anderem einen Messwerkzeugfernauslöser zur Aufnahme von Messdaten mindestens zweier Messwerkzeuge und zur Bereitstellung der Messdaten für eine Auswerteeinheit, wobei der Messwerkzeugfernauslöser eine Betätigungsvorrichtung und eine Kommunikationsvorrichtung aufweist, wobei die Kommunikationsvorrichtung ausgebildet und eingerichtet ist, mit den Messwerkzeugen drahtlos zu kommunizieren und mit der Auswerteeinheit zu kommunizieren, wobei der Messwerkzeugfernauslöser ausgebildet und eingerichtet ist, mittels der Kommunikationsvorrichtung in Abhängigkeit eines mittels der Betätigungsvorrichtung ausgelösten Betätigungsbefehls Messdaten von mindestens einem der Messwerkzeuge gemäß einer vorbestimmten Messsequenz anzufordern und anschließend zu empfangen und/oder in Abhängigkeit des Betätigungsbefehls mittels der Kommunikationsvorrichtung gemäß eines vorbestimmten Steuerbefehls mindestens eines der Messwerkzeuge anzusteuern, wobei der Messwerkzeugfernauslöser ausgebildet und eingerichtet ist, empfangene Messdaten mittels der Kommunikationsvorrichtung seriell an die Auswerteeinheit zu übermitteln.

## Beschreibung

Die Erfindung betrifft einen Messwerkzeugfernauslöser zur Aufnahme von Messdaten mindestens zweier Messwerkzeuge und zur Bereitstellung der Messdaten für eine Auswerteeinheit, ein Messwerkzeugsteuerungsverfahren, ein Messdatenbereitstellungsverfahren sowie ein Messwerkzeugsystem.

In modernen Werkstätten und Fertigungsstätten sind zur Fertigungsüberwachung und Qualitätssicherung eine Vielzahl von Messwerkzeugen vorgesehen, welche beispielsweise nach jedem Bearbeitungs- oder Herstellungsschritt an einem Werkstück oder an einem Förderband in regelmäßigen Zeitabständen an einem geförderten Artikel eine Messung vornehmen. Darüber hinaus können Messungen manuell ausgelöst werden. Beispielsweise werden Längen, Flächen, Volumina, Temperaturen, Gewicht und andere Eigenschaften von Werkstücken oder Umgebungsparameter bestimmt.

Üblicherweise werden die Messwerte an eine zentrale Auswerteeinheit, beispielsweise einen Steuerungscomputer, übermittelt. Die zentrale Auswerteeinheit ist beispielsweise ausgebildet, die Messwerte zu protokollieren und/oder zu überwachen. Zu Qualitätssicherungszwecken können beispielsweise Eigenschaften hergestellter Produkte permanent gespeichert werden. In einem anderen Anwendungsfall überwacht die Auswerteeinheit Parameter hergestellter Produkte und im Fall von Abweichungen des Parameters, beispielsweise einer gemessenen Länge außerhalb eines vorbestimmten Toleranzbereichs, wird eine Warnung ausgegeben.

Beispielsweise sind die Messwerkzeuge kabelgebunden oder drahtlos mit der zentralen Auswerteeinheit verbunden.

Weiterhin sind Fernauslöser, sogenannte Trigger, zum Auslösen der Aufnahme von Messwerten bekannt. Die Trigger sind mit einer Auswerteeinheit verbunden, wobei die Auswerteeinheit ebenfalls mit mindestens einem Messwerkzeug verbunden ist. Beim Auslösen des Fernauslösers wird ein Signal an die zentrale Auswerteeinheit gesendet, welche daraufhin Messwerte von den Messwerkzeugen anfordert und empfängt. Fernauslöser sind beispielsweise mittels Kabelverbindung mit der Auswerteeinheit verbunden oder sind beispielsweise drahtlos mit der Auswerteeinheit verbunden. Insbesondere im letzteren Fall muss dabei eine zusätzliche Software auf der Auswerteeinheit installiert sein, um die entsprechende Funktionalität zur Verfügung zu stellen.

Im Kontext von Werkstätten und Fertigungsanlagen müssen Auswerteeinheiten, üblicherweise Computer, zahlreiche Kompatibilitätsanforderungen erfüllen, wie beispielsweise Abwärtskompatibilität zu älteren Maschinen und älteren Schnittstellen. Daher kann nicht stets zusätzliche Software auf die Auswerteeinheit aufgespielt werden.

Es ist eine Aufgabe der Erfindung, die Aufnahme und Bereitstellung von Messdaten mittels eines Fernauslösers an eine Auswerteeinheit zu vereinfachen und dabei hohe Kompatibilität der Auswerteeinheit zu ermöglichen.

Gelöst wird diese Aufgabe durch einen Messwerkzeugfernauslöser zur Aufnahme von Messdaten mindestens zweier Messwerkzeuge und zur Bereitstellung der Messdaten für eine Auswerteeinheit, wobei der Messwerkzeugfernauslöser eine Betätigungsvorrichtung und eine Kommunikationsvorrichtung aufweist, wobei die Kommunikationsvorrichtung ausgebildet und eingerichtet ist, mit den Messwerkzeugen drahtlos zu kommunizieren und mit der Auswerteeinheit zu kommunizieren, wobei der Messwerkzeugfernauslöser ausgebildet und eingerichtet ist, mittels der Kommunikationsvorrichtung in Abhängigkeit eines mittels der Betätigungsvorrichtung ausgelösten Betätigungsbefehls Messdaten von mindestens einem der Messwerkzeuge gemäß einer vorbestimmten Messsequenz anzufordern und anschließend zu empfangen und/oder in Abhängigkeit des Betätigungsbefehls mittels der Kommunikationsvorrichtung gemäß eines vorbestimmten Steuerbefehls mindestens eines der Messwerkzeuge anzusteuern, wobei der Messwerkzeugfernauslöser ausgebildet und eingerichtet ist, empfangene Messdaten mittels der Kommunikationsvorrichtung seriell an die Auswerteeinheit zu übermitteln.

Die Erfindung basiert auf dem Grundgedanken, dass ein Messwerkzeugfernauslöser zum Anfordern und Empfangen der Messdaten von mindestens einem der Messwerkzeuge sowie zur Übermittlung an eine Auswerteeinheit ausgebildet und eingerichtet ist. Der Messwerkzeugfernauslöser ist ausgebildet und eingerichtet, die empfangenen Messdaten in serieller Abfolge an die Auswerteeinheit zu übermitteln.

Dadurch, dass die Messdaten nacheinander übertragen werden, werden Auswerteeinheiten, welche nur einen seriellen Messdateneingang aufweisen, ertüchtigt, gleichzeitig angeforderte Messdaten zu verarbeiten.

Messdaten seriell an eine Auswerteeinheit zu übermitteln bedeutet im Kontext dieser Offenbarung insbesondere, dass die Messdaten in einer seriellen Datenübertragung übermittelt werden. Hierfür ist beispielsweise eine virtuelle serielle Schnittstelle, zum Beispiel ein virtueller COM-Port, vorgesehen. Insbesondere wird in Ausführungsformen ein serielles Übermitteln als ein Übertragen einzelner Messdaten in serieller Abfolge, also nacheinander, verstanden. Hierzu ist beispielsweise ein Übermitteln von Messdaten gemäß eines human interface device-Protokolls (HID-Protokolls), zum Beispiel in Form von Tastatursignalen, vorgesehen. Insbesondere ist die Auswerteeinheit nicht ausgebildet, gleichzeitig mehrere Messdaten zu empfangen. Auf diese Weise wird eine Kollision von Messwerten vermieden, wenn mehrere Messwerkzeuge gleichzeitig Messdaten über den Messwerkzeugfernauslöser an eine Auswerteeinheit übermitteln.

Die Kommunikationsvorrichtung ist ausgebildet und eingerichtet mit den mindestens zwei Messwerkzeugen drahtlos zu kommunizieren. Beispielsweise ist die Kommunikationsvorrichtung ausgebildet, jeweils eine Kommunikationsverbindung zu einer Mehrzahl von Messwerkzeugen aufzubauen und von der Mehrzahl von Messwerkzeugen Messdaten zu empfangen.

Bevorzugterweise ist der Messwerkzeugfernauslöser ausgebildet und eingerichtet, von mindestens einem der Messwerkzeuge gleichzeitig und/oder nacheinander Messdaten anzufordern. Ein Anfordern von Messdaten erfolgt gemäß einer vorbestimmten Messsequenz. Eine Messsequenz ist eine zeitliche Abfolge von Messanforderungen an mindestens eines der Messwerkzeuge. Eine Messsequenz weist mindestens eine Messanforderung auf. In Ausführungsformen weist eine Messsequenz mehrere Messanforderungen auf, welche alle an ein Messwerkzeug oder jeweils an ein Messwerkzeug oder an mehrere Messwerkzeuge gerichtet sind.

Es ergibt sich der technische Vorteil, dass bei Verwendung eines erfindungsgemäßen Messwerkzeugfernauslösers gleichzeitig oder sequentiell angeforderte Messdaten mehrerer Messwerkzeuge an eine Auswerteeinheit übermittelt werden können, wobei nur geringe Anforderungen an die Auswerteeinheit zu stellen sind, was eine hohe Kompatibilität schafft.

Ein Steuerbefehl ist ein vom Messwerkzeugfernauslöser an mindestens ein Messwerkzeug gesendeter Befehl, welcher im Messwerkzeug mindestens eine Messeinstellung ändert. Eine Messeinstellung ist beispielsweise ein Nullpunkt einer Messung oder eine Messeinheit oder ein Datenformat oder ein Messmodus, wobei ein Messmodus beispielsweise der momentane Wert oder ein Minimal-, Maximal- oder Durchschnittswert ist.

In einer Ausführungsform ist der Messwerkzeugfernauslöser ein mit einer Auswerteeinheit verbundenes virtuelles Messwerkzeug. Gegenüber der Auswerteeinheit gibt der Messwerkzeugfernauslöser die angeforderten und empfangenen Messdaten in kompatibler Form wieder. Vorteilhafterweise ist der Messwerkzeugfernauslöser als anpassbare Schnittstelle zwischen Messwerkzeugen und Auswerteeinheit ausgebildet.

Bevorzugterweise weist der Messwerkzeugfernauslöser einen Zwischenspeicher auf und der Messwerkzeugfernauslöser ist ausgebildet und eingerichtet, empfangene Messdaten mittels des Zwischenspeichers zwischenzuspeichern. Dies ermöglicht größere Flexibilität in der Anpassung an die Empfangsmöglichkeiten der Auswerteeinheit. Zudem ist in Ausführungsformen der Messwerkzeugfernauslöser ausgebildet und eingerichtet, die zwischengespeicherten Messdaten zu verarbeiten und die verarbeiteten Messdaten seriell an die Auswerteeinheit zu übermitteln.

In einer Ausführungsform ist der Messwerkzeugfernauslöser ausgebildet und eingerichtet, den Betätigungsbefehl aus einer Mehrzahl vorbestimmter Betätigungsbefehle zu erkennen. Beispielsweise ist eine Unterscheidung zwischen einer kurzen Betätigung und einer langen Betätigung vorgesehen und/oder eine Unterscheidung zwischen einer Betätigung und einer Folge von zwei Betätigungen vorgesehen. In Abhängigkeit der unterschiedlichen Betätigungen der Betätigungsvorrichtung wird ein Betätigungsbefehl erkannt, gemäß dem Messdaten angefordert und/oder Messwerkzeuge angesteuert werden. Insbesondere ist jedem vorbestimmten Betätigungsbefehl eine vorbestimmte Messsequenz und/oder ein vorbestimmter Steuerbefehl zugeordnet.

Eine hohe Flexibilität im Einsatz des Messwerkzeugfernauslösers wird erreicht, wenn der Messwerkzeugfernauslöser einen Massenspeicher zur Speicherung von Konfigurationsdateien aufweist, wobei der Messwerkzeugfernauslöser ausgebildet und eingerichtet ist, gemäß mindestens einer im Massenspeicher gespeicherten Konfigurationsdatei mit der Auswerteeinheit zu kommunizieren und/oder empfangene Messdaten seriell an die Auswerteeinheit zu übermitteln und/oder Messdaten von mindestens einem der Messwerkzeuge gemäß der vorbestimmten Messsequenz anzufordern und/oder mindestens eines der Messwerkzeuge gemäß des vorbestimmten Steuerbefehls anzusteuern, wobei insbesondere die Kommunikationsvorrichtung ausgebildet und eingerichtet ist, den Massenspeicher der Auswerteeinheit als verbundenen Wechseldatenträger zur Verfügung zu stellen.

Insbesondere ist eine Konfigurationsdatei eine Textdatei für Einstellungen für das Kommunizieren mit der Auswerteeinheit und/oder für das Aufnehmen von Messdaten von den Messwerkzeugen. Vorzugsweise beinhaltet die mindestens eine Konfigurationsdatei Parameter für den Betrieb des Messwerkzeugfernauslösers. In Abhängigkeit der in der mindestens einen Konfigurationsdatei gespeicherten Einstellungen erfolgt die Kommunikation des Messwerkzeugfernauslösers mit Messwerkzeugen und/oder Auswerteeinheit. Bevorzugterweise ist der Messwerkzeugfernauslöser ausgebildet und eingerichtet, beim Gerätestart die mindestens eine Konfigurationsdatei einzulesen. Insbesondere ist die mindestens eine Konfigurationsdatei, insbesondere mittels der Auswerteeinheit, lesbar und/oder schreibbar. Bevorzugterweise ist die mindestens eine Konfigurationsdatei bearbeitbar. In einer Ausführungsform ist der Messwerkzeugfernauslöser eingerichtet und ausgebildet, Änderungen in mindestens einer Konfigurationsdatei zu detektieren, wobei insbesondere beim Detektieren einer Änderung die mindestens eine Konfigurationsdatei erneut eingelesen und verarbeitet wird.

Beispielsweise enthält die Konfigurationsdatei Angaben zu den mindestens zwei Messwerkzeugen, mit denen die Kommunikationsvorrichtung kommuniziert. In einer Ausführungsform sind in mindestens einer Konfigurationsdatei Gerätetyp, Seriennummer, voreingestellte Mess-Vergleichswerte und/oder voreingestellte Messmodi für jedes der Messwerkzeuge vorgesehen. In einer Ausführungsform, in der zur Kommunikation zwischen Messwerkzeugfernauslöser und Auswerteeinheit ein Kommunikationsprotokoll verwendet wird, das mehrere Kommunikationskanäle aufweist, ist vorgesehen, dass in mindestens einer Konfigurationsdatei für jedes der Messwerkzeuge ein Kommunikationskanal, insbesondere eine Kanalnummer, zugeordnet ist.

In einer weiteren Ausführungsform weist eine Konfigurationsdatei Kommunikationsparameter für das serielle Übermitteln von Messdaten an die Auswerteeinheit auf. Beispielsweise ist ein Gerätemodus, ein Übertragungsprotokoll und/oder die Formatierung von Messdaten, insbesondere Werte- und Zeilenseparatoren, in einer Konfigurationsdatei angegeben.

Ferner ist beispielsweise vorgesehen, dass in mindestens einer Konfigurationsdatei mindestens eine Messsequenz und/oder mindestens ein Steuerbefehl vorbestimmt ist.

Bevorzugterweise ist der Messwerkzeugfernauslöser dadurch weitergebildet, dass der Messwerkzeugfernauslöser ausgebildet und eingerichtet ist, in Abhängigkeit des Betätigungsbefehls aus einer Mehrzahl vorbestimmter Messsequenzen die vorbestimmte Messsequenz und/oder aus einer Mehrzahl vorbestimmter Steuerbefehle den vorbestimmten Steuerbefehl auszuwählen. Dies erhöht die Anpassbarkeit des Messwerkzeugfernauslösers an unterschiedliche Auswerteeinheiten und unterschiedliche Messwerkzeuge. Unterschiedlichen Betätigungsbefehlen ist beispielsweise jeweils eine vorbestimmte Messsequenz und/oder ein vorbestimmter Steuerbefehl zuordbar oder zugeordnet.

Insbesondere ist die vorbestimmte Messsequenz
(a) ein gleichzeitiges Anfordern von Messdaten von den Messwerkzeugen und/oder
(b) ein gleichzeitiges Anfordern von Messdaten von mindestens einem der Messwerkzeuge und/oder
(c) ein gleichzeitiges Anfordern von Messdaten von einer Messwerkzeuggruppe umfassend mindestens eines der Messwerkzeuge und/oder
(d) eine Abfolge von Anforderungen von Messdaten von mindestens einem der Messwerkzeuge mit einem, insbesondere mittels des Betätigungsbefehls, vorbestimmten Zeitabstand zwischen den Anforderungen und/oder
(e) eine Abfolge von Anforderungen von Messdaten von mindestens einer Messwerkzeuggruppe umfassend mindestens eines der Messwerkzeug mit einem, insbesondere mittels des Betätigungsbefehls, vorbestimmten Zeitabstand zwischen den Anforderungen.

Bei einem gleichzeitigen Anfordern von Messdaten von mehreren Messwerkzeugen wie bei Messsequenz gemäß (b) ist es beispielsweise möglich, dass die Messwerkzeuge teilweise gleichzeitig Messdaten an den Messwerkzeugfernauslöser übermitteln. Dieser empfängt diese Messdaten und übermittelt diese seriell an die Auswerteeinheit.

Ein gleichzeitiges Anfordern von Messdaten von mindestens einem Messwerkzeug gemäß (b) ist ferner beispielsweise das gleichzeitige Anfordern mehrerer Messwerte eines Messwerkzeugs wie Minimalwert und Maximalwert eines vorbestimmten Messzeitraums sowie den aktuellen Messwert. In einem anderen Beispiel ist ein gleichzeitiges Anfordern von Messdaten von mindestens einem der Messwerkzeuge ein Anfordern vom aktuellen Messwert sowie eines Durchschnittswerts eines vorbestimmten Messzeitraums von allen Messwerkzeugen.

Ein Abfolge von Anforderungen von Messdaten von einem Messwerkzeug gemäß (d) ist beispielsweise eine Min/Max-Delta-Messung, wobei in einer ersten Anforderung, d.h. einem ersten Anfordern, von einem Messgerät ein Start einer Messung angefordert wird und in einer zweiten Anforderung, d.h. einem zweiten Anfordern, von demselben Messgerät ein Ende der Messung angefordert wird, woraufhin das Messgerät den Minimalwert, den Maximalwert und/oder die Differenz von Minimal- und Maximalwert im zeitlichen Intervall zwischen dem ersten Anfordern und dem zweiten Anfordern übermittelt. Dies ist beispielsweise eine typische Messung zur Überprüfung des Radius einer gefertigten Welle.

Ein vorbestimmter Zeitabstand ist beispielsweise mittels des Betätigungsbefehls vorbestimmt. Zum Beispiel ist der Zeitabstand durch den Zeitabstand zwischen mehrfachem Betätigen der Betätigungsvorrichtung vorgegeben. In einer anderen Ausführungsform ist für einen vorbestimmten Betätigungsbefehl, z.B. ein langes Betätigen, ein vorbestimmter Zeitabstand, insbesondere in einer Konfigurationsdatei, vorgesehen.

Insbesondere ist ein vorbestimmter Steuerbefehl
(a) ein Zurücksetzen auf Null von mindestens einem der Messwerkzeuge und/oder
(b) ein Setzen auf einen vorbestimmten Setzwert von mindestens einem der Messwerkzeuge und/oder
(c) ein Einstellen einer Messeinheit und/oder eines Datenformats und/oder einer Messrichtung mindestens eines der Messwerkzeuge und/oder
(d) ein Einstellen eines Messmodus für mindestens eines der Messwerkzeuge.

Auf diese Weise ist der Messwerkzeugfernauslöser flexibel an die vorgesehene Auswerteeinheit und die eingesetzten Messwerkzeuge anpassbar.

Ein Setzen auf einen vorbestimmten Setzwert gemäß (b) ist auch als "Preset" bekannt. Ein Messwerkzeug wird in einem vorgegebenen Zustand auf einen vorbestimmten Setzwert gesetzt, beispielsweise ein Messschieber beim Messen eines Werkstücks mit bekannter Länge auf diese Länge gesetzt.

Ein Messmodus gemäß (d) ist beispielsweise das Messen eines Minimalwerts, eines Maximalwerts und/oder des aktuellen Messwerts. Weiterhin ist in Ausführungsformen ein Messmodus das Angeben von Messparametern als Messwert, beispielsweise das Zurückgeben des Setzwerts oder eines Messbereichs.

In einer weiteren Ausführungsform ist vorgesehen, dass der Messwerkzeugfernauslöser ausgebildet und eingerichtet ist, in Abhängigkeit des Betätigungsbefehls ein Eingabesignal und/oder ein Steuersignal, insbesondere ein Tastatursignal, an die Auswerteeinheit zu übermitteln. Dies ermöglicht ein Fernsteuern der Auswerteeinheit vom Messwerkzeugfernauslöser aus und vereinfacht deren Bedienung.

Vorteilhafterweise weist die Kommunikationsvorrichtung eine Input-Kommunikationsvorrichtung zur Kommunikation mit den mindestens zwei Messwerkzeugen und eine Output-Kommunikationsvorrichtung zur Kommunikation mit der Auswerteeinheit auf. Eine bauliche Trennung der Komponenten der Input-Kommunikationsvorrichtung und der Output-Kommunikationsvorrichtung bewirkt eine einfache Konstruktion und einen stabilen Betrieb des Messwerkzeugfernauslösers.

Besonders komfortabel und zuverlässig ist die Verwendung eines Messwerkzeugfernauslösers, wenn der Betätigungsbefehl mittels einer mechanischen und/oder akustischen und/oder optischen Betätigung der Betätigungsvorrichtung (36) auslösbar ist oder ausgelöst wird .

In einer Ausführungsform ist vorgesehen, dass die Betätigungsvorrichtung ein Fußbedienelement, insbesondere einen Fußtaster, aufweist. Dies ermöglicht eine zuverlässige Betätigung während des Arbeitsablaufs ohne Notwendigkeit des Einsatzes der Hände.

Eine mechanische Betätigung ist beispielsweise das Betätigen eines Fußtasters. In einer Ausführungsform ist ein Fußbedienelement ein Fußschalter, wobei insbesondere der Fußschalter mindestens zwei mögliche Schaltpositionen aufweist. In einer anderen Ausführungsform ist die Betätigungsvorrichtung ein Grobhandtaster. Eine akustische Betätigung ist beispielsweise ein Sprachbefehl. Zum Beispiel wird ein Sprachbefehl mittels eines Mikrofons aufgezeichnet und von einer Verarbeitungseinheit verarbeitet. Eine optische Betätigung ist in einer Ausführungsform ein Durchbrechen einer Lichtschranke oder ein Beleuchten eines Lichtsensors mit einer Lichtquelle oder ein Abdunkeln eines Helligkeitssensors.

In einer Ausführungsform weist eine als Fußtaster ausgebildete Betätigungsvorrichtung die Betätigungsbefehle "Klick", "Doppelklick" sowie "Long Press", also ein Halten der Betätigungsvorrichtung für eine vorbestimmte Zeit, auf. In Abhängigkeit des vom Nutzer verwendeten Betätigungsbefehls werden beispielsweise unterschiedliche Messdaten angefordert. In einer weiteren Ausführungsform umfasst ein Betätigungsbefehl eine Sequenz von Betätigungen. Beispielsweise ist das Drücken einer Betätigungsvorrichtung in einer Abfolge "Kurz-Lang-Kurz" als ein vorbestimmter Betätigungsbefehl erkennbar.

Beispielsweise werden in Abhängigkeit des erkannten Betätigungsbefehls Messdaten eines vorbestimmten Messmodus der mindestens zwei Messwerkzeuge angefordert. Ein Messmodus ist beispielsweise "aktueller Messwert", "Minimalwert", "Maximalwert" oder "Messwert-Differenz". Dabei ist vorteilhafterweise, insbesondere bei den drei letztgenannten Messmodi, eine Referenz, insbesondere ein Referenzzeitpunkt, angegeben. Beispielsweise wird von einem Messwerkzeug der Minimalwert der vergangenen 60 Minuten oder die Differenz des aktuellen Messwerts gegenüber einer Länge von 6 mm angefordert. Der Messwerkzeugfernauslöser ist in einer Ausführungsform dazu ausgebildet und eingerichtet, an mehrere Messwerkzeuge gleichzeitig eine solche Anforderung zu senden.

Messparameter, welche als Messdaten angefordert werden, sind beispielsweise Voreinstellungen der Messwerkzeuge. Zum Beispiel ist ein Messparameter ein voreingestellter Messwertbereich für eine Länge oder eine Temperatur.

In Ausführungsformen weist die Betätigungsvorrichtung und/oder der Messwerkzeugfernauslöser eine Steuereinheit auf, wobei die Steuereinheit ausgebildet und eingerichtet ist, Nutzereingaben zu verarbeiten, wobei der Messwerkzeugfernauslöser ausgebildet und eingerichtet ist, in Abhängigkeit der Nutzereingaben Messdaten, insbesondere gemäß einer vorbestimmten Messsequenz, anzufordern, zu empfangen und zu übermitteln. Beispielsweise können durch das Drücken einer als zusätzlichem Druckknopf ausgebildeten Steuereinheit die Anforderung der Messdaten auf die Abfrage der aktuellen Messparameter umgestellt werden. Weiterhin ist in einer Ausführungsform vorgesehen, dass in Abhängigkeit der Nutzereingaben gemäß einem vorbestimmten Steuerbefehl mindestens eines der Messwerkzeuge angesteuert wird.

Eine zuverlässige Kommunikationsverbindung wird ermöglicht, wenn die Kommunikationsvorrichtung ausgebildet und eingerichtet ist, mit den Messwerkzeugen mittels Bluetooth zu kommunizieren. Bevorzugterweise sind die mindestens zwei Messwerkzeuge mittels einer Kommunikationsverbindung jeweils ausschließlich mit dem Messwerkzeugfernauslöser verbunden.

Flexibel können die Messwerkzeuge angesteuert werden, wenn der Messwerkzeugfernauslöser ausgebildet und eingerichtet ist, die Messwerkzeuge in Messwerkzeuggruppen zu gruppieren. Beispielsweise werden in Abhängigkeit eines erkannten Betätigungsbefehls die Messdaten einer vorbestimmten Messwerkzeuggruppe angefordert. Beispielsweise werden nur die Messwerkzeuge, welche eine Temperatur als Messdaten übermitteln, oder die Messwerkzeuge, welche einem vorbestimmten Arbeitsplatz zugeordnet sind, abgefragt. Bevorzugterweise sind die Messwerkzeuggruppen mittels einer Einstellung in der mindestens einen im Massenspeicher gespeicherten Konfigurationsdatei gruppierbar oder gruppiert.

In einer Ausführungsform sind die Messdaten gleichzeitig aufgenommene Messdaten. In einer Ausführungsform werden die Messdaten von den Messwerkzeugen mittels des Messwerkzeugfernauslösers gleichzeitig angefordert, allerdings sind durch Latenzen in der Übertragung und/oder im Messvorgang die Messdaten zu ähnlicher Zeit, aber nicht gleichzeitig aufgenommen. In einigen Anwendungsbereichen können kleine Latenzen vernachlässigbar sein. Zum gleichzeitigen Anfordern gleichzeitiger Messdaten ist in einer Ausführungsform vorgesehen, dass der Messwerkzeugfernauslöser ausgebildet und eingerichtet ist, beim Anfordern von Messdaten einen Zeitstempel eines Messzeitpunkts zu übermitteln. Messwerkzeuge umfassend einen zeitlichen Zwischenspeicher erhalten diese Anforderung und senden jene Messdaten an den Messwerkzeugfernauslöser zurück, die dem angeforderten Zeitstempel zugeordnet sind.

Eine zuverlässige Kommunikation zwischen Messwerkzeugfernauslöser und Auswerteeinheit ist gewährleistet, wenn die Kommunikationsvorrichtung ausgebildet und eingerichtet ist, mit der Auswerteeinheit kabelgebunden, insbesondere mittels USB, zu kommunizieren oder drahtlos, insbesondere mittels Bluetooth, insbesondere Bluetooth Low Energy (BLE), zu kommunizieren. In einer Ausführungsform ist die Kommunikationsvorrichtung ausgebildet und eingerichtet, Befehle und/oder Informationen von der Auswerteeinheit zu empfangen.

In einer Ausführungsform ist der Messwerkzeugfernauslöser derart weitergebildet, dass die Kommunikationsvorrichtung ausgebildet und eingerichtet ist, in einem ersten Gerätemodus als HID-Gerät oder in einem zweiten Gerätemodus als virtueller COM-Port mit der Auswerteeinheit zu kommunizieren. Hierdurch wird eine hohe Kompatibilität zu unterschiedlichen Auswerteeinheiten hergestellt. Bevorzugterweise ist der Gerätemodus mittels einer Einstellung in der mindestens einen im Massenspeicher gespeicherten Konfigurationsdatei auswählbar oder ausgewählt.

Vorzugsweise ist der Messwerkzeugfernauslöser als USB-Verbundgerät ausgebildet, welches eine Kommunikationskomponente, insbesondere eine communication device class (CDC)-Komponente, und eine Datenträgerkomponente, insbesondere eine USB-Massenspeicher-Komponente, aufweist.

Eine hohe Kompatibilität zwischen Messwerkzeugfernauslöser und Auswerteeinheit wird ermöglicht, wenn die Kommunikationsvorrichtung ausgebildet und eingerichtet ist, empfangene Messdaten mittels mindestens eines der Protokolle USB human interface device (USB-HID), BLE-HID, MUX10, MUX50, EUROMUX und DMX16 an die Auswerteeinheit zu übermitteln. In einer Ausführungsform ist das Protokoll mittels einer Einstellung in der mindestens einen im Massenspeicher gespeicherten Konfigurationsdatei auswählbar oder ausgewählt. Beispielsweise weisen die Kommunikationsprotokolle MUX10, MUX50, EUROMUX und DMX16 mehrere Kommunikationskanäle auf, sodass jedem Messwerkzeug ein Kommunikationskanal zuordbar ist.

Insbesondere ist die Kommunikationsvorrichtung ausgebildet und eingerichtet, mittels eines human interface device (HID) Protokolls mit der Auswerteeinheit zu kommunizieren. Insbesondere ist das HID-Protokoll ein HID-Profil für Bluetooth Low Energy (BLE).

In einer Ausführungsform ist vorgesehen, dass die Kommunikationsvorrichtung ausgebildet und eingerichtet ist, empfangene Messdaten mittels des Hoffmann Group Connected Tools (HCT) Protokolls an die Auswerteeinheit zu übermitteln.

Eine fehlerfreie Auswertung der Messdaten wird ermöglicht, wenn der Messwerkzeugfernauslöser ausgebildet und eingerichtet ist, die Messdaten mit einer eindeutigen Messwerkzeugidentifizierung an die Auswerteeinheit zu übermitteln. Beispielsweise wird in einem wiederkehrenden seriellen Messdaten-Signal mit mehreren aufeinanderfolgenden Messdaten jeweils die gleiche Spaltenzuordnung verwendet. In einer anderen Ausführungsform ist jedem übermittelten Messwert eine eindeutige Messwerkzeugidentifizierung vorangestellt. Eine eindeutige Messwerkzeugidentifizierung ist insbesondere eine Seriennummer des jeweiligen Messwerkzeugs.

In einer Ausführungsform, in der die Kommunikationsvorrichtung als virtueller COM-Port mit der Auswerteeinheit kommuniziert, ist vorgesehen, dass der Messwerkzeugfernauslöser ausgebildet und eingerichtet ist, empfangene Messdaten eines jeweiligen Messwerkzeugs in einem jeweilig vorbestimmten Kanal eines verwendeten Kommunikationsprotokolls zu übermitteln. Beispielsweise ist eine Kanalzuordnung der Messwerkzeuge in einer im Massenspeicher gespeicherten Konfigurationsdatei hinterlegt. Insbesondere ist jedem Messwerkzeug ein Kanal der seriellen Datenübertragung zwischen Messwerkzeugfernauslöser und Auswerteeinheit zugeordnet.

Ferner wird die Aufgabe durch ein Messwerkzeugsteuerungsverfahren zum Steuern von mindestens zwei Messwerkzeugen und/oder zum Bereitstellen von Messdaten mindestens zweier Messwerkzeuge mittels eines Messwerkzeugfernauslösers gelöst, wobei der Messwerkzeugfernauslöser eine Betätigungsvorrichtung und eine Kommunikationsvorrichtung aufweist, wobei das Messwerkzeugsteuerungsverfahren die folgenden aufeinanderfolgenden Schritte umfasst:
- Auslösen eines Betätigungsbefehls mittels der Betätigungsvorrichtung,
- in Abhängigkeit des Betätigungsbefehls Ansteuern von mindestens einem der Messwerkzeuge gemäß eines vorbestimmten Steuerbefehls mittels des Messwerkzeugfernauslösers, und/oder
   in Abhängigkeit des Betätigungsbefehls Anfordern von Messdaten von mindestens einem der Messwerkzeuge gemäß einer vorbestimmten Messsequenz mittels des Messwerkzeugfernauslösers,
- Ausführen des Steuerbefehls mittels des mindestens einen der Messwerkzeuge und/oder
   Messen der Messdaten mittels des mindestens einen der Messwerkzeuge und Übermitteln der Messdaten von dem mindestens einen der Messwerkzeuge an den Messwerkzeugfernauslöser und serielles Übermitteln der Messdaten vom Messwerkzeugfernauslöser an eine Auswerteeinheit.

Das Messwerkzeugsteuerungsverfahren vereinigt die gleichen Vorteile wie der zuvor beschriebene Messwerkzeugfernauslöser auf sich, sodass zur Vermeidung von Wiederholungen auf die obenstehenden Ausführungen verwiesen wird.

In einer Ausführungsform weist das Messwerkzeugsteuerungsverfahren nach dem Auslösen eines Betätigungsbefehls als weiteren Schritt auf:
- Erkennen des Betätigungsbefehls mittels des Messwerkzeugfernauslösers, insbesondere aus einer Mehrzahl vorbestimmter Betätigungsbefehle.

Bevorzugterweise ist das Messwerkzeugsteuerungsverfahren derart weitergebildet, dass der Messwerkzeugfernauslöser ein oben beschriebener Messwerkzeugfernauslöser ist. Es wird auf die Ausführungen der oben beschriebenen Vorteile und Eigenschaften verwiesen.

Ferner wird die Aufgabe durch ein Messdatenbereitstellungsverfahren zum Bereitstellen von Messdaten mindestens zweier Messwerkzeuge mittels eines Messwerkzeugfernauslösers gelöst, wobei der Messwerkzeugfernauslöser eine Betätigungsvorrichtung und eine Kommunikationsvorrichtung aufweist, wobei das Messdatenbereitstellungsverfahren die folgenden aufeinanderfolgenden Schritte umfasst:
- Auslösen eines Betätigungsbefehls mittels der Betätigungsvorrichtung,
- in Abhängigkeit des Betätigungsbefehls Anfordern von Messdaten von mindestens zwei der Messwerkzeuge gemäß einer vorbestimmten Messsequenz mittels des Messwerkzeugfernauslösers,

- Messen der Messdaten mittels der mindestens zwei der Messwerkzeuge,
- Übermitteln der Messdaten von den mindestens zwei der Messwerkzeuge an den Messwerkzeugfernauslöser, und
- serielles Übermitteln der Messdaten vom Messwerkzeugfernauslöser an eine Auswerteeinheit.

In einer Ausführungsform weist das Messdatenbereitstellungsverfahren nach dem Auslösen eines Betätigungsbefehls als weiteren Schritt auf:
- Erkennen des Betätigungsbefehls mittels des Messwerkzeugfernauslösers, insbesondere aus einer Mehrzahl vorbestimmter Betätigungsbefehle.

Das Messdatenbereitstellungsverfahren vereinigt die gleichen Vorteile wie der zuvor beschriebene Messwerkzeugfernauslöser auf sich, sodass zur Vermeidung von Wiederholungen auf die obenstehenden Ausführungen verwiesen wird.

Bevorzugterweise ist das Messdatenbereitstellungsverfahren derart weitergebildet, dass der Messwerkzeugfernauslöser ein oben beschriebener Messwerkzeugfernauslöser ist. Es wird auf die Ausführungen der oben beschriebenen Vorteile und Eigenschaften verwiesen.

Ferner wird die Aufgabe durch ein Messwerkzeugsystem gelöst, umfassend einen voranstehend beschriebenen Messwerkzeugfernauslöser und mindestens zwei Messwerkzeuge, wobei die Messwerkzeuge ausgebildet und eingerichtet sind, drahtlos mit dem Messwerkzeugfernauslöser zu kommunizieren und auf Anforderung Messdaten an den Messwerkzeugfernauslöser zu übermitteln.

Das Messwerkzeugsystem weist die gleichen Vorteile wie der Messwerkzeugfernauslöser, das Messwerkzeugsteuerungsverfahren und das Messwertbereitstellungsverfahren auf. Auf die obenstehenden Ausführungen wird verwiesen.

In einer Ausführungsform ist vorgesehen, dass das Messwerkzeugsystem eine Auswerteeinheit insbesondere ein Computer Aided Quality (CAQ)-System und/oder ein Manufacturing Execution System (MES)-System, aufweist. Auf diese Weise wird die Effizienz des Messwerkzeugsystems erhöht. In einer Ausführungsform ist eine Auswerteeinheit ein Personal Computer (PC).

In einer Ausführungsform ist die Auswerteeinheit räumlich entfernt vom Messwerkzeugfernauslöser und einer Bedienperson des Messwerkzeugfernauslösers angeordnet.

Ein CAQ-System ist ein Qualitätsmanagement-Softwaresystem und dient der Erfassung qualitätsbezogener Daten. Hierzu werden beispielsweise statistische Methoden verwendet, um Daten aus Messung, Zuordnung und Sichtprüfung auszuwerten. Ein CAQ-System unterstützt bevorzugterweise die Analyse, Dokumentation und Archivierung qualitätsrelevanter Daten zu Produktionsprozessen und unterstützt insbesondere Planungs- und Implementierungsmaßnahmen zur Qualitätssicherung.

Ein MES-System ist ein Software-System, das den Prozess der Herstellung von Waren vom Rohmaterial bis zum fertigen Produkt überwacht, verfolgt, dokumentiert und steuert. Dabei hat insbesondere ein MES eine direkte Anbindung an die verteilten Systeme der Prozessautomatisierung und ermöglicht Führung, Lenkung, Steuerung oder Kontrolle der Produktion in Echtzeit.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht eines Messwerkzeugsystems umfassend einen Messwerkzeugfernauslöser gemäß einem ersten Ausführungsbeispiel,
- Fig. 2: eine schematische Ansicht eines Messwerkzeugsystems umfassend einen Messwerkzeugfernauslöser gemäß einem zweiten Ausführungsbeispiel, und
- Fig. 3: ein schematisches Ablaufdiagramm eines Messwertbereitstellungsverfahrens.

In den Zeichnungen sind jeweils gleiche oder gleichartige Elemente und/oder Teile mit denselben Bezugsziffern versehen, so dass von einer erneuten Vorstellung jeweils abgesehen wird.

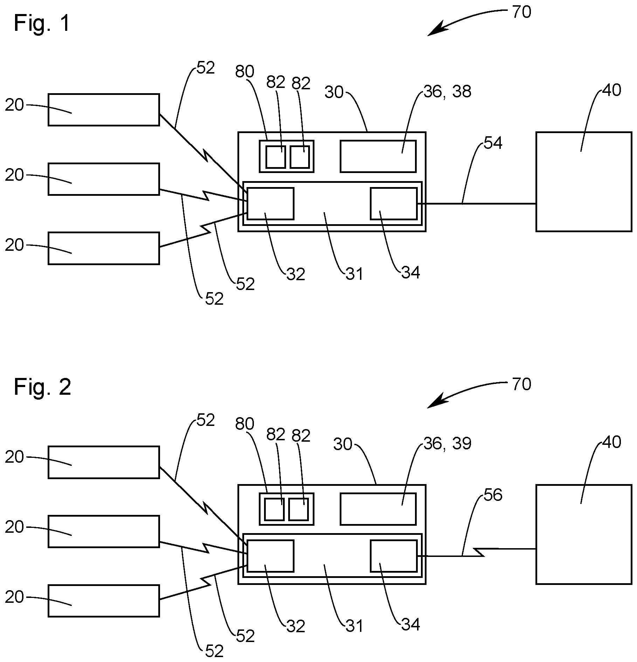

Fig. 1 zeigt eine schematische Ansicht eines Messwerkzeugsystems 70 umfassend einen Messwerkzeugfernauslöser 30 gemäß einem ersten Ausführungsbeispiel. Der Messwerkzeugfernauslöser 30 weist eine als Fußtaster 38 ausgebildete Betätigungsvorrichtung 36 auf. Weiterhin umfasst der Messwerkzeugfernauslöser 30 eine Kommunikationsvorrichtung 31, welche eine Input-Kommunikationsvorrichtung 32 und eine Output-Kommunikationsvorrichtung 34 aufweist.

Die Input-Kommunikationsvorrichtung 32 ist ausgebildet und eingerichtet, mittels Bluetooth-Verbindungen 52 mit Messwerkzeugen 20 zu kommunizieren. Die Bluetooth-Verbindungen 52 sind drahtlose Kommunikationsverbindungen, wie es durch das blitz-ähnliche Symbol in den Verbindungslinien in Fig. 1 angezeigt ist.

Die Output-Kommunikationsvorrichtung 34 ist ausgebildet und eingerichtet, mittels einer USB-Verbindung 54 mit einer Auswerteeinheit 40 zu kommunizieren. Die Auswerteeinheit 40 ist in diesem Ausführungsbeispiel ein Personal Computer (PC). Die Output-Kommunikationsvorrichtung 34 ist als virtueller COM-Port an der Auswerteeinheit 40 angemeldet. Hierzu ist der Messwerkzeugfernauslöser 30 als USB-Gerät der "communication device class" (CDC)-Klasse identifiziert. Die Kommunikation zwischen der Output-Kommunikationsvorrichtung 34 und der Auswerteeinheit 40 erfolgt mittels des Protokolls MUX50.

Beim Betätigen des Fußtasters 38 durch einen Nutzer fordert der Messwerkzeugfernauslöser 30 gleichzeitig von den Messwerkzeugen 20 jeweils einen Messwert an. In diesem Ausführungsbeispiel ist der Fußtaster 38 derart eingerichtet, dass bei einem kurzen Tasten jeweils die aktuellen Messwerte angefordert werden. Bei einem langen Tasten des Fußtasters 38 ("Long Press") wird der Maximalmesswert der vergangenen 3 Minuten angefordert. Bei den Messwerkzeugen 20 handelt es sich in diesem Ausführungsbeispiel um Längenmesswerkzeuge, welche jeweils unterschiedliche Maße eines durch Fräsen hergestellten Bauteils bestimmen.

Nach der gleichzeitigen Anforderung von Messdaten übermitteln die Messwerkzeuge 20 die angeforderten Messdaten mittels der Bluetooth-Verbindungen 52 an die Kommunikationsvorrichtung 31 des Messwerkzeugfernauslösers 30. Dieser wiederum übermittelt die Messdaten seriell mittels der USB-Verbindung 54 an die Auswerteeinheit 40. Also werden die Messdaten der Messwerkzeuge 20 nacheinander an die Auswerteeinheit 40 übertragen. Dabei werden in diesem Ausführungsbeispiel zur eindeutigen Zuordnung durch die Auswerteeinheit 40 die Messwerte eines jeweiligen Messwerkzeugs 20 in jeweils einem separaten Kanal der MUX50-Verbindung übertragen..

Der Messwerkzeugfernauslöser 30 weist einen Massenspeicher 80 auf, in welchem zwei Konfigurationsdateien 82 gespeichert sind. Der Messwerkzeugfernauslöser 30 ist gemäß der in den zwei Konfigurationsdateien 82 gespeicherten Einstellungen konfiguriert.

In einer ersten Konfigurationsdatei 82, einer csv-Textdatei, sind Angaben für die zu verbindenden Messwerkzeuge 20 zusammengestellt. Hierzu sind die Namen, Seriennummern und Kanalnummern für die MUX50-Verbindung der Messwerkzeuge 20 in der Konfigurationsdatei 82 gespeichert. Beispielsweise ist für jedes Messwerkzeug 20 eine Zeile der Konfigurationsdatei 82 vorgesehen. Weiterhin ist für jedes Messwerkzeug 20 die Angabe einer Messwerkzeuggruppe vorgesehen, sodass beispielsweise zwei Messwerkzeuge 20 in eine erste Messwerkzeuggruppe und das dritte Messwerkzeug 20 in eine zweite Messwerkzeuggruppe gruppiert sind.

In einer zweiten Konfigurationsdatei 82 sind Parameter der Kommunikationsverbindung zwischen Messwerkzeugfernauslöser 30 und Auswerteeinheit 40 gespeichert. Beispielsweise ist ein Gerätemodus, ein Kommunikationsprotokoll, ein Tastaturlayout und/oder Steuerzeichen enthalten. In diesem Ausführungsbeispiel ist der Gerätemodus "CDC" für einen virtuellen COM-Port und das Kommunikationsprotokoll ist MUX50. Als Tastaturlayout ist beispielsweise "Deutsch" eingestellt, wobei dies vor allem bei einer HID-Steuerung mit Tastatureingaben relevant ist. Schließlich sind als Steuerzeichen als Werteseparator ein Komma, als Datensatzseparator ein Zeilenumbruch und als Dezimaltrennzeichen ein Punkt eingestellt.

In Ausführungsformen sind in einer der zwei Konfigurationsdateien 82 oder in einer weiteren Konfigurationsdatei Einstellungen für eine Mehrzahl von Betätigungsbefehlen, eine Mehrzahl von Messsequenzen und/oder eine Mehrzahl von Steuerbefehlen vorgesehen. Insbesondere ist in einer Konfigurationsdatei 82 jeweils eine Messsequenz und/oder ein Steuerbefehl einem Betätigungsbefehl zugeordnet.

Bevorzugterweise ist der Messwerkzeugfernauslöser 30 ausgebildet und eingerichtet, bei Start des Geräts die Konfigurationsdateien 82 aus dem Massenspeicher 80 zu laden, zu verarbeiten, und gemäß der Konfigurationsdateien 82 Kommunikationsverbindungen mit den Messwerkzeugen 20 aufzubauen.

In Fig. 2 ist eine schematische Ansicht eines anderen Messwerkzeugsystems 70, umfassend einen Messwerkzeugfernauslöser 30 gemäß einem zweiten Ausführungsbeispiel, dargestellt.

Die Messwerkzeugsysteme 70 aus Fig. 1 und Fig. 2 ähneln sich. Beide weisen jeweils drei Messwerkzeuge 20 auf, welche mittels Bluetooth-Verbindungen 52 drahtlos mit der Kommunikationsvorrichtung 31 des Messwerkzeugfernauslösers 30 verbunden sind.

In diesem Ausführungsbeispiel ist die Kommunikationsverbindung zwischen Messwerkzeugfernauslöser 30 und Auswerteeinheit 40 als drahtlose Bluetooth-HID-Verbindung 56 ausgebildet. Folglich kommuniziert die Output-Kommunikationsvorrichtung 34 in einem Gerätemodus als HID-Gerät mit der Auswerteeinheit 40.

Darüber hinaus ist die Betätigungsvorrichtung 36 als Grobhandtaster 39 ausgebildet. In einer anderen, nicht dargestellten Ausführungsform ist die Betätigungsvorrichtung 36 ein Mikrofon mit einer Verarbeitungseinrichtung, um gesprochene Befehle zu empfangen und zu verarbeiten, um daraus einen Auslösebefehl für den Messwerkzeugfernauslöser zu ermitteln. In einer Ausführungsform sind exakte Phrasen als Betätigungsbefehl vorbestimmt; in einer anderen Ausführungsform werden, ähnlich eines haushaltsüblichen Smartspeakers, frei formulierte Sprachbefehle verarbeitet, interpretiert und einem Betätigungsbefehl zugeordnet, welcher anschließend ausgeführt wird.

In dem in Fig. 2 dargestellten Ausführungsbeispiel sind die Messwerkzeuge 20 gruppiert (nicht dargestellt). Die in Fig. 2 oberen beiden Messwerkzeuge 20 sind in eine erste Messwerkzeuggruppe gruppiert, während das in Fig. 2 unten dargestellte Messwerkzeug 20 in eine zweite Messwerkzeuggruppe sortiert ist. Dies ermöglicht beispielsweise, dass nur Messwerte einer Messwerkzeuggruppe angefordert werden, falls nur diese benötigt werden. Auf diese Weise können Verarbeitungsressourcen gespart werden.

Wie im ersten Ausführungsbeispiel weist der in Fig. 2 dargestellte Messwerkzeugfernauslösers 30 einen Massenspeicher 80 auf, wobei auf dem Massenspeicher 80 mindestens eine Konfigurationsdatei 82 mit Parametern bezüglich des Betriebs des Messwerkzeugfernauslösers 30 gespeichert ist. Beispielsweise sind in einer Konfigurationsdatei 82 die drei Messwerkzeuge 20 einschließlich ihrer Seriennummer sowie einem vorbestimmten Messmodus hinterlegt.

Weiterhin sind in einer weiteren Konfigurationsdatei 82 Einstellungen für die HID-Kommunikation zwischen Kommunikationsvorrichtung 31 und Auswerteeinheit 40 vorgesehen. Beispielsweise ist einstellbar, ob Messwerte mit oder ohne Vorzeichen und/oder mit oder ohne Messwerteinheit übermittelt werden. Ferner ist die Anzahl der Vorkommastellen, die Anzahl der Nachkommastellen und/oder ein Dezimaltrennzeichen einstellbar. Schließlich ist in einer Ausführungsform mittels einer Einstellung in einer Konfigurationsdatei 82 eine Einbettung des Messwerts in Zusatzinformationen vorgesehen, beispielsweise mittels Ergänzen einer Seriennummer des Messwerkzeugs, einer laufenden Nummer einer Messwerterfassung und/oder einer Nummer in einer Messwerkzeuggruppe.

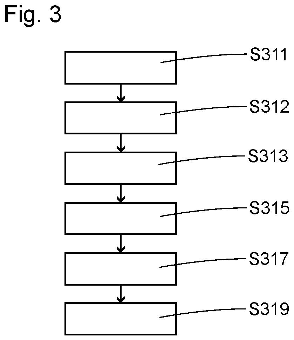

Schließlich ist in Fig. 3 ein Messwertbereitstellungsverfahren zum Bereitstellen von Messdaten mindestens zweier Messwerkzeuge 20 mittels eines Messwerkzeugfernauslösers 30 dargestellt. In einem ersten Schritt wird ein Betätigungsbefehl mittels der Betätigungsvorrichtung 36 ausgelöst (S311). Anschließend wird der Betätigungsbefehl mittels des Messwerkzeugfernauslösers 30 aus einer Mehrzahl vorbestimmter Betätigungsbefehle erkannt (S312). Anschließend werden in Abhängigkeit des Betätigungsbefehls Messdaten von mindestens zwei der mindestens zwei Messwerkzeuge 20 mittels des Messwerkzeugfernauslösers 30 gemäß einer vorbestimmten Messsequenz angefordert (S313). In diesem Ausführungsbeispiel ist die vorbestimmte Messsequenz, welche dem erkannten Betätigungsbefehl zugeordnet ist, das gleichzeitige Anfordern des Messwerts von mindestens zwei der mindestens zwei Messwerkzeuge 20. In einem anderen Ausführungsbeispiel ist die vorbestimmte Messsequenz beispielsweise zunächst ein Anfordern eines Messwerts von einem ersten Messwerkzeug 20 und nach Ablauf eines vorbestimmten Zeitabstands ein Anfordern eines Messwerts von einem zweiten Messwerkzeug 20.

Daraufhin messen die mindestens zwei Messwerkzeuge 20 die angeforderten Messdaten (S315) und übermitteln die Messdaten zurück an den Messwerkzeugfernauslöser 30 (S317). Schließlich übermittelt der Messwerkzeugfernauslöser 30 die Messdaten seriell an die Auswerteeinheit 40 (S319).

In einem anderen, nicht dargestellten Messwertbereitstellungsverfahren ist als vorbestimmte Messsequenz für das Anfordern von Messdaten vorgesehen, dass ein Messwerkzeug 20 zunächst aufgefordert wird eine Min-Max-Delta-Messung auszuführen und nach Ablauf eines vorbestimmten Zeitabstands dasselbe Messwerkzeug 20 aufgefordert wird, die Messdaten der Min-Max-Delta-Messung zu übermitteln. Bei einer Min-Max-Delta-Messung werden der minimale Messwert, der maximale Messwert und/oder die Differenz des minimalen und des maximalen Messwerts des Messzeitraums als Messdaten zurückgegeben.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 20: Messwerkzeug
- 30: Messwerkzeugfernauslöser
- 31: Kommunikationsvorrichtung
- 32: Input-Kommunikationsvorrichtung
- 34: Output-Kommunikationsvorrichtung
- 36: Betätigungsvorrichtung
- 38: Fußtaster
- 39: Grobhandtaster
- 40: Auswerteeinheit
- 52: Bluetooth-Verbindung
- 54: USB-Verbindung
- 56: Bluetooth-HID-Verbindung
- 70: Messwerkzeugsystem
- 80: Massenspeicher
- 82: Konfigurationsdatei
- S311: Auslösen eines Betätigungsbefehls
- S312: Erkennen eines Betätigungsbefehls
- S313: Anfordern von Messdaten
- S315: Messen der Messdaten
- S317: Übermitteln der Messdaten
- S319: serielles Übermitteln der Messdaten

## Patentansprüche

1. Messwerkzeugfernauslöser (30) zur Aufnahme von Messdaten mindestens zweier Messwerkzeuge (20) und zur Bereitstellung der Messdaten für eine Auswerteeinheit (40),
wobei der Messwerkzeugfernauslöser (30) eine Betätigungsvorrichtung (36) und eine Kommunikationsvorrichtung (31) aufweist, wobei die Kommunikationsvorrichtung (31) ausgebildet und eingerichtet ist, mit den Messwerkzeugen (20) drahtlos zu kommunizieren und mit der Auswerteeinheit (40) zu kommunizieren,
wobei der Messwerkzeugfernauslöser (30) ausgebildet und eingerichtet ist, mittels der Kommunikationsvorrichtung (31) in Abhängigkeit eines mittels der Betätigungsvorrichtung (36) ausgelösten Betätigungsbefehls Messdaten von mindestens einem der Messwerkzeuge (20) gemäß einer vorbestimmten Messsequenz anzufordern und anschließend zu empfangen und/oder in Abhängigkeit des Betätigungsbefehls mittels der Kommunikationsvorrichtung (31) gemäß eines vorbestimmten Steuerbefehls mindestens eines der Messwerkzeuge (20) anzusteuern,
wobei der Messwerkzeugfernauslöser (30) ausgebildet und eingerichtet ist, empfangene Messdaten mittels der Kommunikationsvorrichtung (31) seriell an die Auswerteeinheit (40) zu übermitteln.

2. Messwerkzeugfernauslöser (30) nach Anspruch 1, **dadurch gekennzeichnet, dass** der Messwerkzeugfernauslöser (30) ausgebildet und eingerichtet ist, den Betätigungsbefehl aus einer Mehrzahl vorbestimmter Betätigungsbefehle zu erkennen.

3. Messwerkzeugfernauslöser (30) nach Anspruch 1 oder 2, **dadurch gekennzeichnet, dass** der Messwerkzeugfernauslöser (30) einen Massenspeicher (80) zur Speicherung von Konfigurationsdateien (82) aufweist, wobei der Messwerkzeugfernauslöser (30) ausgebildet und eingerichtet ist, gemäß mindestens einer im Massenspeicher (80) gespeicherten Konfigurationsdatei (82) mit der Auswerteeinheit (40) zu kommunizieren und/oder empfangene Messdaten seriell an die Auswerteeinheit (40) zu übermitteln und/oder Messdaten von mindestens einem der Messwerkzeuge (20) gemäß der vorbestimmten Messsequenz anzufordern und/oder mindestens eines der Messwerkzeuge (20) gemäß des vorbestimmten Steuerbefehls anzusteuern, wobei insbesondere die Kommunikationsvorrichtung (31) ausgebildet und eingerichtet ist, den Massenspeicher (80) der Auswerteeinheit (40) als verbundenen Wechseldatenträger zur Verfügung zu stellen, wobei insbesondere der Messwerkzeugfernauslöser (30) ausgebildet und eingerichtet ist, in Abhängigkeit des Betätigungsbefehls aus einer Mehrzahl vorbestimmter Messsequenzen die vorbestimmte Messsequenz und/oder aus einer Mehrzahl vorbestimmter Steuerbefehle den vorbestimmten Steuerbefehl auszuwählen.

4. Messwerkzeugfernauslöser (30) nach einem der Ansprüche 1 bis 3, **dadurch gekennzeichnet, dass** die vorbestimmte Messsequenz
(a) ein gleichzeitiges Anfordern von Messdaten von den Messwerkzeugen (20) ist und/oder
(b) ein gleichzeitiges Anfordern von Messdaten von mindestens einem der Messwerkzeuge (20) ist und/oder
(c) ein gleichzeitiges Anfordern von Messdaten von einer Messwerkzeuggruppe umfassend mindestens eines der Messwerkzeuge (20) ist und/oder
(d) eine Abfolge von Anforderungen von Messdaten von mindestens einem der Messwerkzeuge (20) mit einem, insbesondere mittels des Betätigungsbefehls, vorbestimmten Zeitabstand zwischen den Anforderungen ist und/oder
(e) eine Abfolge von Anforderungen von Messdaten von mindestens einer Messwerkzeuggruppe umfassend mindestens eines der Messwerkzeug (20) mit einem, insbesondere mittels des Betätigungsbefehls, vorbestimmten Zeitabstand zwischen den Anforderungen ist.

5. Messwerkzeugfernauslöser (30) nach einem der Ansprüche 1 bis 4, **dadurch gekennzeichnet, dass** der vorbestimmte Steuerbefehl
(a) ein Zurücksetzen auf Null von mindestens einem der Messwerkzeuge (20) ist und/oder
(b) ein Setzen auf einen vorbestimmten Setzwert von mindestens einem der Messwerkzeuge (20) ist und/oder
(c) ein Einstellen einer Messeinheit und/oder eines Datenformats und/oder einer Messrichtung mindestens eines der Messwerkzeuge (20) ist und/oder
(d) ein Einstellen eines Messmodus für mindestens eines der Messwerkzeuge (20) ist.

6. Messwerkzeugfernauslöser (30) nach einem der Ansprüche 1 bis 5, **dadurch gekennzeichnet, dass** der Betätigungsbefehl mittels einer mechanischen und/oder akustischen und/oder optischen Betätigung der Betätigungsvorrichtung (36) auslösbar ist oder ausgelöst wird, wobei insbesondere die Betätigungsvorrichtung (36) ein Fußbedienelement, insbesondere einen Fußtaster (38), aufweist.

7. Messwerkzeugfernauslöser (30) nach einem der Ansprüche 1 bis 6, **dadurch gekennzeichnet, dass** die Kommunikationsvorrichtung (31) ausgebildet und eingerichtet ist, mit den Messwerkzeugen (20) mittels Bluetooth zu kommunizieren.

8. Messwerkzeugfernauslöser (30) nach einem der Ansprüche 1 bis 7, **dadurch gekennzeichnet, dass** der Messwerkzeugfernauslöser (30) ausgebildet und eingerichtet ist, die Messwerkzeuge (20) in Messwerkzeuggruppen zu gruppieren,
wobei insbesondere die Messwerkzeuggruppen mittels einer Einstellung in der mindestens einen im Massenspeicher (80) gespeicherten Konfigurationsdatei (82) gruppierbar oder gruppiert sind.

9. Messwerkzeugfernauslöser (30) nach einem der Ansprüche 1 bis 8, **dadurch gekennzeichnet, dass** die Kommunikationsvorrichtung (31) ausgebildet und eingerichtet ist, mit der Auswerteeinheit (40) kabelgebunden, insbesondere mittels USB, zu kommunizieren oder drahtlos, insbesondere mittels Bluetooth, insbesondere Bluetooth Low Energy, zu kommunizieren, wobei insbesondere die Kommunikationsvorrichtung (31) ausgebildet und eingerichtet ist, in einem ersten Gerätemodus als HID-Gerät oder in einem zweiten Gerätemodus als virtueller COM-Port mit der Auswerteeinheit (40) zu kommunizieren,
wobei insbesondere der Gerätemodus mittels einer Einstellung in der mindestens einen im Massenspeicher (80) gespeicherten Konfigurationsdatei (82) auswählbar oder ausgewählt ist, wobei insbesondere die Kommunikationsvorrichtung (31) ausgebildet und eingerichtet ist, empfangene Messdaten mittels mindestens eines der Protokolle USB-HID, BLE-HID, MUX10, MUX50, EUROMUX und DMX16 an die Auswerteeinheit (40) zu übermitteln,
wobei insbesondere das Protokoll mittels einer Einstellung in der mindestens einen im Massenspeicher (80) gespeicherten Konfigurationsdatei (82) auswählbar oder ausgewählt ist.

10. Messwerkzeugfernauslöser (30) nach einem der Ansprüche 1 bis 9, **dadurch gekennzeichnet, dass** der Messwerkzeugfernauslöser (30) ausgebildet und eingerichtet ist, die Messdaten jeweils mit einer eindeutigen Messwerkzeugidentifizierung an die Auswerteeinheit (40) zu übermitteln.

11. Messwerkzeugsteuerungsverfahren zum Steuern von mindestens zwei Messwerkzeugen und/oder zum Bereitstellen von Messdaten mindestens zweier Messwerkzeuge (20) mittels eines Messwerkzeugfernauslösers (30), wobei der Messwerkzeugfernauslöser (30) eine Betätigungsvorrichtung (36) und eine Kommunikationsvorrichtung (31) aufweist, wobei das Messwerkzeugsteuerungsverfahren die folgenden aufeinanderfolgenden Schritte umfasst:
- Auslösen eines Betätigungsbefehls mittels der Betätigungsvorrichtung (36),
- in Abhängigkeit des Betätigungsbefehls Ansteuern von mindestens einem der Messwerkzeuge (20) gemäß eines vorbestimmten Steuerbefehls mittels des Messwerkzeugfernauslösers (30), und/oder
in Abhängigkeit des Betätigungsbefehls Anfordern von Messdaten von mindestens einem der Messwerkzeuge (20) gemäß einer vorbestimmten Messsequenz mittels des Messwerkzeugfernauslösers (30),
- Ausführen des Steuerbefehls mittels des mindestens einen der Messwerkzeuge (20) und/oder Messen der Messdaten mittels des mindestens einen der Messwerkzeuge (20) und Übermitteln der Messdaten von dem mindestens einen der Messwerkzeuge (20) an den Messwerkzeugfernauslöser (30) und serielles Übermitteln der Messdaten vom Messwerkzeugfernauslöser (30) an eine Auswerteeinheit (40).

12. Messwerkzeugsteuerungsverfahren nach Anspruch 11, **dadurch gekennzeichnet, dass** der Messwerkzeugfernauslöser (30) ein Messwerkzeugfernauslöser (30) nach einem der Ansprüche 1 bis 10 ist.

13. Messdatenbereitstellungsverfahren zum Bereitstellen von Messdaten mindestens zweier Messwerkzeuge (20) mittels eines Messwerkzeugfernauslösers (30), wobei der Messwerkzeugfernauslöser (30) eine Betätigungsvorrichtung (36) und eine Kommunikationsvorrichtung (31) aufweist, wobei das Messdatenbereitstellungsverfahren die folgenden aufeinanderfolgenden Schritte umfasst:
- Auslösen eines Betätigungsbefehls mittels der Betätigungsvorrichtung (36),
- in Abhängigkeit des Betätigungsbefehls Anfordern von Messdaten von mindestens zwei der Messwerkzeuge (20) gemäß einer vorbestimmten Messsequenz mittels des Messwerkzeugfernauslösers (30),
- Messen der Messdaten mittels der mindestens zwei der Messwerkzeuge (20),
- Übermitteln der Messdaten von den mindestens zwei der Messwerkzeuge (20) an den Messwerkzeugfernauslöser (30), und
- serielles Übermitteln der Messdaten vom Messwerkzeugfernauslöser (30) an eine Auswerteeinheit (40).

14. Messdatenbereitstellungsverfahren nach Anspruch 13, **dadurch gekennzeichnet, dass** der Messwerkzeugfernauslöser (30) ein Messwerkzeugfernauslöser (30) nach einem der Ansprüche 1 bis 10 ist.

15. Messwerkzeugsystem (70) umfassend einen Messwerkzeugfernauslöser (30) nach einem der Ansprüche 1 bis 10 und mindestens zwei Messwerkzeuge (20), wobei die Messwerkzeuge (20) ausgebildet und eingerichtet sind, drahtlos mit dem Messwerkzeugfernauslöser (30) zu kommunizieren und auf Anforderung Messdaten an den Messwerkzeugfernauslöser (30) zu übermitteln, wobei insbesondere das Messwerkzeugsystem (70) eine Auswerteeinheit (40), insbesondere ein CAQ-System und/oder ein MES-System, aufweist.
